# EUROPÄISCHE PATENTSCHRIFT

(11) **EP 2 808 636 B1**
(45) Veröffentlichungstag und Bekanntmachung des Hinweises auf die Patenterteilung: **02.03.2016**
(21) Anmeldenummer: 13169864.9
(22) Anmeldetag: 30.05.2013
(51) Int. Cl.: F26B 25/22, G01N 21/35, B29C 70/50, G01N 21/359, G01N 21/3554, B44C 5/04, E04F 13/08, E04F 15/10, F26B 13/00, D06M 15/423, E04F 13/16, D06M 10/00

(54) **Verfahren zur Bestimmung des Feuchtegehaltes einer Harzschicht auf einer Trägerplatte**
Method for determining the moisture content of a resin layer on a support plate
Procédé de détermination de la teneur en humidité d'une couche de résine sur une plaque de support

(43) Veröffentlichungstag der Anmeldung: 03.12.2014
(73) Patentinhaber: Flooring Technologies Ltd., Pieta PTA 9044 (MT)
(72) Erfinder: Kalwa, Norbert, 32805 Horn-Bad Meinberg (DE); Denk, Andre, 16909 Wittstock/Dosse (DE)
(74) Vertreter: Maikowski & Ninnemann

(56) Entgegenhaltungen:
- EP-A2- 1 454 763
- DE-A1-102008 041 052
- US-A1- 2003 048 440
- US-A1- 2007 131 862
- US-A1- 2009 017 223

## Beschreibung

Die vorliegende Erfindung betrifft ein Verfahren zur Bestimmung des Feuchtegehaltes einer Harzschicht auf einer Trägerplatte nach dem Oberbegriff des Anspruchs 1, die Verwendung eines NIR(Nahinfrarot)-Detektors zur Bestimmung des Feuchtegehaltes einer Harzschicht auf einer Trägerplatte nach Anspruch 14.

### Beschreibung

Holzwerkstoffplatten als Trägermaterialien werden in den verschiedensten Bereichen eingesetzt und sind weit verbreitet. So sind Holzwerkstoffplatten unter anderem aus der Verwendung als Fußbodenpaneele, zum Beispiel in Form von Laminatböden, als Dämmstoffplatten für den Innen- und Außenbereich oder auch als Wandpaneele bekannt. Derartige Werkstoffplatten werden üblicherweise aus Holzfasern, Holzspänen oder Strands hergestellt. Im Falle von Laminatböden werden zum Beispiel aus Holzfasern hergestellte HDF-Platten (HDF = Faserplatte mit erhöhter Rohdichte) mit vielfältigen Dekoren und darauf aufgetragenen Schutzschichten verwendet.

Als Schutz- bzw. Verschleißschicht ist zum Beispiel die Verwendung von so genannten Overlay-Papieren bekannt. Diese Overlay-Papiere sind dünne, typischerweise mit einem Melaminharz getränkte Papiere, wobei verschleisshemmende Teilchen, wie zum Beispiel Korundpartikel, in das Kunstharz des Overlays eingemischt sind, um die Abriebfestigkeit des Laminats bzw. der Holzwerkstoffplatte zu erhöhen. Neben der Verwendung dieser Overlay-Papiere als Verschleißschicht wird in einer anderen Variante ein Pulver auf die Oberfläche der Werkstoffplatte aufgetragen, welches zum Beispiel natürliche oder synthetische Fasern, abriebfeste Partikel und Bindemittel umfasst. Auch hier wird durch die Verwendung insbesondere von verschleisshemmenden Partikeln die Abriebfestigkeit und Stabilität der Oberfläche der Werkstoffplatte erhöht.

Neben den oben genannten Verschleißschichten in Form eines Overlay-Papieres oder eines Pulvers mit abriebfesten Partikeln ist auch der Auftrag eines flüssigen Harzes als Schutzschicht bekannt, in welchem ebenfalls verschleisshemmende Partikel, wie zum Beispiel Korundpartikel oder Glaskugeln, enthalten sein können. Eine solche flüssige Harzschicht wird auch als Flüssigoverlay bezeichnet (EP 2 338 693 A1).

Bei der Produktion von Holzwerkstoffplatten unter Verwendung eines Flüssigoverlays ist ein entscheidendes Kriterium zur Qualitätssicherung die Bestimmung der Feuchte während des Beschichtungsprozesses. Beim Beschichten von Holzwerkstoffplatten, wie zum Beispiel von mit einer aufgedruckten Dekorschicht versehenen Holzwerkstoffplatten, mit wasserhaltigen, duroplastischen Harzen, wie zum Beispiel Harnstoff- oder Melaminharzen, muss das Wasser aus dem Harz durch Konvektion und/oder Bestrahlung, zum Beispiel mittels Infrarot (IR) und/oder Nahinfrarot (NIR)-Strahlung auf einen definierten Prozentsatz reduziert werden. Das zu entfernende Wasser stammt zum einen aus der wässrigen Harzlösung und zum anderen entsteht durch die Aushärtung des Harzes aufgrund der Kondensationsreaktion zusätzliches Wasser. Dieser Wassergehalt muss sich in einem relativ engen Rahmen bewegen, da sonst Qualitätsprobleme bei der Verarbeitung bzw. beim fertigen Produkt zeigen können.

Das Grundproblem, das sich bei der Feuchtebestimmung von Platten mit Flüssigaufbau stellt, ist das relativ ungünstige Verhältnis zwischen aufgetragener Harz-Wassermenge und dem Gesamtgewicht der beschichteten Platte. Dieses Verhältnis liegt bei ca. 1:30 bis 1:50, das heißt, die aufgetragene flüssige Overlayschicht ist in sehr dünnen Schichten vorgesehen. Aufgrund des gewichtsmäßigen geringen Anteils des Flüssigoverlays ist es schwierig, die Feuchteabnahme zum Beispiel gravimetrisch zu bestimmen. Ein solches Verfahren wird zum Beispiel bei der Bestimmung der Restfeuchte von mit duroplastischen Harzen imprägnierten Papieren angewendet. Dort liegt das Verhältnis zwischen Träger (Papier) und Harz bei ca. 1:1.

Auch eine Bestimmung der Feuchtigkeit einer Harzschicht, die als Flüssigoverlay auf eine Holzwerkstoffplatte aufgetragen ist, über eine so genannte Darrprobe ist nicht möglich. Das Darrprobe-Verfahren ist die genaueste Methode zur Bestimmung der Holzfeuchte, wobei eine Probe bei 103+/-2°C für 24 Stunden in einem Trockenofen getrocknet wird. Die Holzfeuchte ist definiert als das Verhältnis des Gewichts des im Holz enthaltenen Wassers zum Gewicht des absolut trockenen Holzes (Darrgewicht). Die Holzfeuchte ist demnach das Verhältnis zwischen Nassgewicht und Trockengewicht (Darrgewicht).

Bei Anwendung der Darrprobe auf einer mit einem Flüssigoverlay beschichteten Werkstoffplatte würde entsprechend nicht nur die Feuchte der Flüssigoverlay-Beschichtung bestimmt werden, sondern auch die Feuchte des Holzwerkstoffes, so dass man nur einen Wert der Gesamtfeuchte aus Platte und Beschichtung erhalten würde. Auch würde die

Darrprobe bzw. das Darrverfahren aufgrund des Trocknungsprozesses von 24 Stunden keine kurzfristige Veränderung bzw. Einflussnahme auf das Trocknungsverfahren innerhalb der Fertigungslinie ermöglichen. Zudem kann eine solche Feuchtigkeitsbestimmung auch nur mit einer fertig beschichteten Werkstoffplatte nach Verlassen der Fertigungslinie durchgeführt werden und erlaubt somit auch aus diesem Grund kein Eingreifen in den Fertigungsprozess.

Auch die Möglichkeit des Verschließens der Holzwerkstoffplatte, genauer gesagt, der Holzträgerplatte, durch eine wasserundurchlässige Folie wäre nicht zur Lösung des Problems geeignet, da das Beschichtungssystem auf dem HWS-Träger aufsteigende Feuchte aus der Platte passieren lassen würde.

Der vorliegenden Erfindung liegt daher die technische Aufgabe zugrunde, ein Verfahren bereitzustellen, mit welchem die Bestimmung des Feuchtegehaltes von einer auf einer Holzwerkstoffplatte vorgesehenen Harzschicht, zum Beispiel einem Flüssigoverlay, möglich ist, welches eine hinreichend genaue Bestimmung der Feuchtigkeit ermöglicht und wodurch Qualitätsmängel, die dem Feuchtegehalt der Harzschicht zugeordnet werden können, abgestellt werden können.

Diese Aufgabe wird erfindungsgemäß durch ein Verfahren mit den Merkmalen des Anspruchs 1 gelöst.

Demnach wird ein Verfahren zur Bestimmung des Feuchtegehaltes von mindestens einer auf mindestens einer Holzwerkstoffplatte als Trägerplatte vorgesehenen Harzschicht, wobei zwischen der mindestens einen Harzschicht und der Trägerplatte eine NIR-reflektierende Schicht vorgesehen ist, bereitgestellt. Das vorliegende Verfahren umfasst die folgenden Schritte:
- Aufnehmen von mindestens einem NIR-Spektrum der auf der mindestens einen Trägerplatte vorgesehenen Harzschicht unter Verwendung eines NIR-Detektors in einem Wellenlängenbereich zwischen 500 nm und 2500 nm, bevorzugt zwischen 700 nm und 2000 nm, insbesondere bevorzugt zwischen 900 nm und 1700 nm;
- Bestimmen des Feuchtegehaltes der Harzschicht durch Vergleich des für die zu vermessende Harzschicht ermittelten NIR-Spektrums mit mindestens einem für mindestens eine Referenzprobe mit bekannten Feuchtegehalt ermittelten NIR-Spektrums mittels einer multivariaten Datenanalyse (MDA),
- wobei das mindestens eine für die mindestens eine Referenzprobe ermittelte NIR-Spektrum mit bekanntem Feuchtegehalt unter Verwendung desselben NIR-Detektors in einem Wellenlängenbereich zwischen 500 nm und 2500 nm, bevorzugt zwischen 700 nm und 2000 nm, insbesondere bevorzugt zwischen 900 nm und 1700 nm vorher bestimmt wurde.

Erfindungsgemäß ist zwischen der mindestens einen Harzschicht und der Holzwerkstoffplatte als Trägerplatte eine weitere Schicht - auch als Grundierungsschicht oder reflektierende Schicht bezeichnet - vorgesehen. Die Zusammensetzung bzw. Beschaffenheit dieser weiteren reflektierenden Schicht wird weiter unten noch im Detail erläutert.

Das vorliegende Verfahren ermöglicht demnach die Bestimmung der Feuchte bzw. des Feuchtegehaltes einer Harzschicht, zum Beispiel eines Flüssigoverlays, die auf die Oberfläche. einer Holzwerkstoffplatte als Trägerplatte aufgetragen ist, unmittelbar im Anschluss an die Beschichtung und/oder Trocknung derselbigen in bekannten Beschichtungs-und Trocknungsvorrichtungen. Von besonderem Vorteil ist, dass durch die Verwendung des NIR-Detektors eine Feuchtebestimmung in einer dünnen Harzschicht vorgenommen werden kann, die auf einer Trägerplatte angeordnet ist.

Der Feuchtegehalt der zu vermessenden Harzschichten liegt bevorzugt bei Werten von max. 15 Gew%, bevorzugt maximal 10 Gew%, insbesondere bevorzugt maximal 8 Gew%. Es ist ganz besonders bevorzugt, wenn der zu bestimmende Feuchtegehalt der Harzschicht zwischen 4 und 8 Gew% liegt.

NIR-Detektoren ermöglichen die Bestimmung von Feuchte bzw. des Wassergehaltes in verschiedensten Materialien, wie zum Beispiel Harzen, Holzwerkstoffen, Holzpellets, Getreide usw. Bei dieser Art der Messung werden in wenigen Zehntelsekunden mehrere hundert NIR-Messungen durchgeführt, so dass auch eine statistische Absicherung der gemessenen Werte gewährleistet ist. Wesentlich ist dabei, dass durch eine Kalibrierung unter Verwendung von Darrproben den spektroskopisch ermittelten Messwerten reale Feuchtewerte gegenübergestellt werden. Dies ist im Fall von Getreide oder Holzpellets leicht möglich, da die Gesamtfeuchte ermittelt werden soll. Bei der Bestimmung der Feuchte in einem Beschichtungssystem auf einem Holzwerkstoff, wie vorliegend im Falle eines Flüssigoverlays auf einer Holzwerkstoffplatte, versagt die beschriebene Methode wegen des zusätzlich aus dem Trägermaterial verdunstenden Wassers.

Dies gilt nicht nur für alle Holzwerkstoffplatten, sondern auch für Trägermaterialien, die Restfeuchten enthalten. All diese können als Träger für dekorative Veredelungen in den unterschiedlichsten Anwendungen verwendet werden. Dabei werden sie Üblicherweise bedruckt und mit Verschleißschichten auf Basis wässriger Harze versehen. Im Einzelnen können dies Spanplatten, Faserplatten, OSB-Platten, Sperrholz, Magnesiumoxid-Platten, Wood-Plastic-Composites, Kunststoffplatten, Zementspan/-faserplatten und Gipsfaserplatten sein. Die Liste lässt sich beliebig verlängern und besitzt keinen Anspruch auf Vollständigkeit.

Erfindungsgemäß wird als Trägerplatte bzw. als Trägermaterial eine Holzwerkstoffplatte, bevorzugt eine mitteldichte Faser (MDF)-, hochdichte Faser (HDF)- oder Grobspan (OSB)-oder Sperrholzplatte, verwendet.

Das vorliegende Verfahren zur Bestimmung des Feuchtegehaltes einer Harzschicht, die auf einer Holzwerkstoffplatte als Trägerplatte angeordnet ist, unter Verwendung eines NIR-Detektors nutzt hingegen den Umstand aus, dass die NIR-Strahlung nicht durch die gesamte Werkstoffplatte, das heißt, durch Harzschicht und Trägerplatte, hindurch dringt, sondern an der Oberfläche der Werkstoffplatte, insbesondere an der NIR-reflektierenden Schicht wie Druck oder Grundierungsschicht reflektiert. Die NIR-Strahlung dringt demnach im vorliegenden Verfahren lediglich und ausschließlich durch die Harzschicht, zum Beispiel Flüssigoverlay-Schicht durch und wird von der Oberfläche der Holzwerkstoffplatte, insbesondere von der NIR-reflektierenden Schicht wie dem Druck zurück reflektiert. Die reflektierte NIR-Strahlung wird durch die Harzschicht in einer charakteristischen Weise absorbiert und das ermittelte NIR-Spektrum wird zur Bestimmung des Feuchtegehaltes verwendet.

Ein für eine Harzschicht wie z.B. ein Melaminharz ermitteltes NIR-Spektrum weist eine deutliche breite Absorptionsbande mit einem Absorptionsmaximum bei ca. 1490 nm auf. Diese Bande ist u.a. typisch für Melaminharz und entspricht der ersten Oberschwingung von N-H-Gruppen. Des Weiteren ist auch typischerweise eine Wasserbande bei ca. 1450 nm vorhanden. Wegen der Überlappung der beiden Banden erscheint die Wasserbande als Schulter der breiten Bande.

Ein unterschiedlicher Feuchtegehalt der Harzschichten ist insbesondere an der Höhe der Basislinie der NIR-Spektern erkennbar, hingegen unterscheiden sich die Formen der NIR-Spektren kaum. Ein linearer Zusammenhang zwischen den Absorptionswert am Bandenmaximum bei ca. 1490 nm und dem Feuchtegehalt gemäß der Gleichung(I) y = mx + b ist nicht nachweisbar, was wahrscheinlich an der Intensitätsabschwächung der Absorptionsbande von N-H Gruppen durch eine fortschreitende Polykondensation des Harzes begründet liegt.

Entsprechend erfolgen der Vergleich und die Interpretation der NIR-Spektren über den gesamten aufgenommenen Spektralbereich. Dies wird mit der multivariaten Datenanalyse MDA durchgeführt. Bei multivariaten Analysemethoden werden typischerweise mehrere statistische Variablen zugleich untersucht. Hierzu wird die in einem Datensatz enthaltene Zahl von Variablen reduziert, ohne gleichzeitig die darin enthaltene Information zu mindern.

Im vorliegenden Fall erfolgt die multivariate Datenanalyse über das Verfahren der Partial Least Squares (PLS) Regression, wodurch ein geeignetes Kalibrationsmodell erstellt werden kann. Die Auswertung der gewonnenen Daten wird bevorzugt mit einer geeigneten Analysesoftware vorgenommen wie z.B. mit der Analysesoftware SIMCA-P der Firma Umetrics AB.

Es ist bevorzugt, wenn die Referenzprobe mit bekanntem Feuchtegehalt mindestens eine auf einer Grundierungsschicht einer Trägerplatte z.B. Holzwerkstoffplatte aufgetragene, insbesondere vorgetrocknete Harzschicht umfasst. Die Harzschicht, ggf. Grundierungsschicht und Trägerplatte der Referenzprobe sind dabei bevorzugterweise gleichartig zu der zu vermessenden Probe aus Harzschicht, ggf. Grundierungsschicht und Trägerplatte. Mit anderen Worten, die Harzschicht der Referenzprobe weist die gleiche Zusammensetzung auf, wie die zu vermessende Harzschicht. Dasselbe gilt für die ggf. zum Einsatz kommende Grundierungsschicht und die Trägerplatte.

Die Gleichartigkeit von zu vermessender Probe und Referenzprobe ist insbesondere bei Verwendung von Harzschichten mit Zusatzstoffen wie Flammschutzmitteln, Fasern, Kohlenstoffnanoröhren und weiteren Additiven wesentlich. Die Zugabe von Zusatzstoffen zur Harzschicht resultiert typischerweise in zusätzlichen Peaks im NIR-Spektrum und ggf. in einer Verschiebung der Basislinie. Entsprechend ist eine erneute Kalibrierung bzw. die Erstellung eines neuen Kalibrationsmodells unter Verwendung einer gleichartigen Referenzprobe erforderlich.

Der Zusammenhang zwischen Feuchtegehalt einer Harzschicht und dem NIR-Spektrum dieser Harzschicht wird bevorzugt wie im Folgenden beschrieben ermittelt.

Zunächst wird eine erste Probe, zum Beispiel in Form einer bedruckten Platte mit einer vorgetrockneten Harzschicht in einem Trockenofen getrocknet, zum Beispiel bei 103 +/-2 °C für 2 Stunden, und nach Abkühlen der getrockneten Probe unter Feuchteausschluss wird eine Messung mit dem NIR-Detektor durchgeführt. Der für eine vollständig getrocknete Probe (Darr-Probe) ermittelte NIR-Spektrum wird als Nullwert verwendet.

Anschließend werden mit einer Harzschicht versehene und vorgetrocknete Trägerplatten mit einer definierten Menge an Wasser besprüht, das sich in der Harzmatrix verteilt. Die so mit Wasser gespickten bzw. besprühten Trägerplatten werden in einem NIR-Detektor vermessen und die NIR-Spektren für diese mit einer definierten Menge an Wasser besprühten Trägerplatten ermittelt. Aufgrund der hohen Anzahl von Messungen innerhalb weniger Zehntelsekunden wird dabei eine eventuell vorhandene Ungleichverteilung des aufgesprühten Wassers eliminiert.

Anschließend erfolgt die Erstellung eines geeigneten Kalibrationsmodells, bevorzugt in der im Folgenden beschriebenen Weise. Zunächst wird ein Kalibrationsmodell aus den Spektren der Proben mit bekanntem Feuchtegehalt (d.h. der mit Wasser gespickten Trägerplatten) unter Verwendung der Partial Least Squares (PLS) Regression erstellt. Dieses Modell wird zur Bestimmung der Restfeuchte in der Darrprobe genutzt. Unter Anwendung dieses Kalibrationsmodells wird von dem Analyseprogramm ein Feuchtegehalt für die Darrprobe (getrocknete Trägerplatte mit Harzschicht) berechnet, wobei sich für die Darr-Probe ein negativer Feuchtewert bzw. Feuchtegehalt ergibt. Anschließend wird der Betrag des Feuchtegehaltes für die Darrprobe zu allen verwendeten Feuchtewerten der mit Wasser gespickten Trägerplatten (Kalibrierproben) addiert und der Feuchtegehalt der Darrprobe gleich Null gesetzt. Aus diesen neuen Kalibrierwerten der Feuchte und den gemessenen NIR-Spektren wird mit Hilfe der Partial Least Squares (PLS) Regression ein neues Kalibrationsmodell erstellt, welches eine Beziehung zwischen den gemessenen NIR-Spektren einer zu vermessenden Harzschicht auf einer Trägerplatte z.B. einer Holzwerkstoffplatte und den NIR-Spektren von Referenzproben mit bekanntem Feuchteanteil erstellt. Dieses zweite Kalibrationsmodell kann zur Vorhersage des Feuchtegehaltes aus dem gemessenen NIR-Spektren der unbekannten Proben verwendet werden.

Zu berücksichtigen ist bei dem oben beschriebenen Kalibrationsmodell, dass es nicht wesentlich ist, den absoluten Feuchtegehalt einer Harzschicht zu bestimmen, sondern vielmehr die Möglichkeit bietet, den Feuchtegehalt einer Harzschicht mit den Qualitätseigenschaften des finalen Werkstoffproduktes zu korrelieren. Das bedeutet, dass die ermittelten Feuchtewerte nicht als absolut genaue Feuchtewerte zu betrachten sind, sondern als ungefähre Werte. Dies erlaubt dann die Entwicklung und Vornahme von Maßnahmen zur Qualitätsverbesserung und/oder zur Prozesssteuerung einer Fabrikationslinie von Werkstoffplatten z.B. Holzwerkstoffplatten. So kann beispielsweise die Trocknerleistung oder der Vorschub bei ungenügender Trocknung einer Harzschicht angepasst werden. Weiterhin kann natürlich auch durch das Vorliegen von NIR-Messwerten eine Fehlersuche nach dem Ausschlussprinzip vorgenommen werden, was vorher nicht möglich war.

In einer Ausführungsform des vorliegenden Verfahrens besteht die zu vermessende Harzschicht aus mindestens einem formaldehydhaltigen Harz, insbesondere einem Melamin-Formaldehyd-Harz, einem Harnstoff-Formaldehyd-Harz oder Gemischen aus beiden. Weiterhin ist auch die Verwendung von wässrigen Polyurethan (PU)- oder Acrylatsystemen möglich.

Die Menge der zu vermessenden Harzschicht kann zwischen 10 bis 150 g Festharz/m², bevorzugt zwischen 20 und 100 g Festharz/m², insbesondere bevorzugt zwischen 40 und 60 g Festharz/m² liegen.

Es ist ebenfalls möglich, dass die zu vermessende Harzschicht abriebfeste Partikel, natürliche und/oder synthetische Fasern und weitere Additive aufweist. Die zu vermessende Harzschicht wird typischerweise in Form einer flüssigen Harzsuspension aus den oben genannten Harzen mit den entsprechenden Zusätzen auf die Oberfläche der Holzwerkstoffplatte aufgebracht.

Die in der Harzschicht (Flüssigoverlay) verwendeten natürlichen oder synthetischen Fasern sind bevorzugt ausgewählt aus der Gruppe enthaltend Holzfasern, Zellulosefasern, partiell gebleichte Zellulosefasern, Wollfasern, Hanffasern und organische oder anorganische Polymerfasern.

Die abriebfesten Partikel des Flüssigoverlays sind bevorzugt ausgewählt aus der Gruppe enthaltend Aluminiumoxide, Korund, Borcabide, Siliziumdioxyde, Siliziumcarbide und

Glaskugeln, wobei Korundpartikel, Glas-/Hohlkugeln bzw. Glaspartikel besonders bevorzugt sind.

Wie bereits oben erwähnt, kann der wärmehärtbaren Harzschicht mindestens ein Additiv zugesetzt werden, das ausgewählt sein kann aus der Gruppe enthaltend leitfähige Substanzen, Flammschutzmittel oder lumineszierende Stoffe. Die leitfähigen Substanzen können ausgewählt sein aus der Gruppe enthaltend Ruß, Kohlefasern, Metallpulver und Nanopartikel, insbesondere Kohlenstoffnanoröhren. Es können auch Kombinationen dieser Substanzen zum Einsatz kommen. Als Flammschutzmittel können zum Beispiel Phosphate, Borate, insbesondere Ammoniumpolyphosphat, Tris(tri-Bromneopentyl) phosphat, Zinkborat oder Borsäurekomplexe von mehrwertigen Alkoholen der Harzschicht zugesetzt werden. Die Verwendung von Flammschutzmitteln führt zu einer Verringerung der Entflammbarkeit und ist daher insbesondere bei Laminatböden von Bedeutung, die in geschlossenen Räumen mit besonderen Anforderungen an den Brandschutz oder in Fluchtwegen eingesetzt werden.

Wie bereits oben erwähnt, können sich aufgrund des Zusatzes an Flammschutzmitteln, Fasern und weitern Additiven die NIR-Spektren durch zusätzliche Peaks verändern. Es kann auch zu einer Verschiebung der Basislinie der NIR-Spektren kommen, was bei der Erstellung des Kalibrationsmodells entsprechend berücksichtigt werden muss. Demnach ist es notwendig, bei Verwendung von Zusätzen zur Harzschicht ein Kalibrationsmodell unter Verwendung einer Referenzprobe zu erstellen, die die gleichen Zusätze in der Harzschicht aufweist.

Zur Verbesserung der Schwerentflammbarkeit können natürlich auch den Trägerplatten, insbesondere den Holzwerkstoffplatten entsprechende Flammschutzmitteln zugefügt werden.

Als lumineszierende Stoffe werden bevorzugt fluoreszierende und/oder phosphoreszierende Stoffe auf anorganischer oder organischer Basis, insbesondere Zinksulfid und Erdalkalialuminate, verwendet. Die lumineszierenden Stoffe können in geometrischen Formen durch Schablonen auf die Oberfläche aufgetragen werden. Durch das Einarbeiten dieser Farbstoffe in die Oberfläche von Werkstoffplatten, die als Fußboden- oder Wandpaneele zum Beispiel in geschlossenen Räumen eingesetzt werden können, ist somit bei Ausfall der Beleuchtung ein Hinweis über Fluchtwege und Fluchtrichtung möglich.

In einer Ausführungsform umfasst die zu vermessende Harzschicht mehr als eine Lage, zum Beispiel mindestens zwei Lagen aus einem Harz. So kann die zu vermessende Harzschicht aus drei Harzlagen bestehen, bzw. drei Harzlagen umfassen, wobei in einer der drei Harzlagen abriebfeste Partikel, zum Beispiel Korundpartikel, enthalten sind, in einer zweiten Harzlage der drei Harzlagen natürliche und/oder synthetische Fasern, wie zum Beispiel Zellulosefasern, enthalten sind und in einer dritten Harzlage der insgesamt drei Harzlagen wiederum abriebfeste Partikel, wie zum Beispiel Glaspartikel, vorhanden sein können. In einer besonders bevorzugten Ausführungsform wird die Lage der Harzschicht enthaltend Korundpartikel auf die Werkstoffplatte als erste Lage aufgetragen, anschließend folgt der Auftrag der die Zellulosefasern enthaltenden zweiten Harzlage und abschließend wird die dritte Harzlage enthaltend Glaspartikel als oberste Lage der Harzschicht aufgebracht. Die erste Harzlage kann 15 bis 25 Gew.%, bevorzugt 20 Gew.% Korundpartikel, die zweite Harzlage 3 bis 7 Gew.%, bevorzugt 5 Gew.% Zellulosefasern und die dritte Harzlage 15 bis 25 Gew.%, bevorzugt 20 Gew.% Glaspartikel enthalten.

Ein Verfahren zur Herstellung der beschriebenen Flüssigoverlayschicht ist unter anderem in der EP 233 86 93 A1 beschrieben. Hierbei erfolgt zunächst nach Reinigung der Ober- und/oder Unterseite einer Holzwerkstoffplatte das Aufbringen einer ersten oberen Korundpartikel enthaltende Harzschicht auf die Oberseite und/oder Unterseite der Holzwerkstoffplatte, ein Trocknen dieser ersten Harzschicht z.B. bis auf eine Restfeuchte von max. 10 Gew.%, bevorzugt von 4 bis 8 Gew.%, anschließendes Aufbringen einer zweiten Zellulosefasern enthaltenen Harzschicht auf die Oberseite und/oder Unterseite der Holzwerkstoffplatte, wiederholtes Trocknen bzw. Antrocknen der zweiten Harzschicht z. B. bis auf eine Restfeuchte von max. 10 Gew.%, bevorzugt von 4 bis 8 Gew.%, Aufbringen einer mindestens dritten Glaspartikel enthaltenden Harzschicht auf die Oberseite und/oder Unterseite mit anschließendem Antrocknen der dritten Harzschicht, z.B. ebenfalls auf eine Restfeuchte von max. 10 Gew.%, bevorzugt von 4 bis 8 Gew. % und ein finales Verpressen des Schichtaufbaus unter Druck- und Temperatureinfluss. Durch die Verwendung eines Flüssigoverlays kann auf das sonst typischerweise vorgesehene Overlaypapier verzichtet werden.

Wie bereits oben erwähnt, ist zwischen der zu vermessenden Harzschicht und der Holzwerkstoffplatte - genauer der Oberfläche der Holzwerkstoffplatte- eine die NIR-Strahlung reflektierende Schicht angeordnet, die z.B. aus Druckfarben bestehen kann.

In einer Variante kann diese NIR-reflektierende Schicht eine weiße Grundierungsschicht, mindestens eine auf die Holzwerkstoffplatte aufgedruckte Dekor- oder Druckschicht, und/oder optional mindestens eine Schicht aus strahlenhärtbarer Spachtelmasse umfassen.

Im Falle einer Dekorschicht als Grundierungsschicht kann eine wasserbasierte pigmentierte Druckfarbe im Tiefdruckverfahren oder im Digitaldruckverfahren aufgetragen werden. Die Druckfarbe kann dabei entweder direkt auf die unbehandelte Oberfläche der Werkstoffplatte oder auch auf eine vorgesehene Grundierung aufgetragen werden. Diese wasserbasierte pigmentierte Druckfarbe kann auch in mehr als einer Schicht aufgetragen werden, zum Beispiel 3 bis 10 Schichten, bevorzugt 5 bis 8 Schichten, wobei nach jedem Schichtauftrag die Druckfarbe zum Beispiel in einem Konvektionstrockner oder einem NIR-Trockner getrocknet werden kann.

Ein Problem bei der Feuchtedetektion durch NIR ist, dass der Detektor farbempfindlich ist. Dies bedeutet, dass bei gleicher Feuchte im Harzüberstand, aber in ihrer Helligkeit stark unterschiedlichen Drucken auf der Platte, unterschiedliche Feuchtewerte angezeigt werden. Deshalb werden im Falle der Verwendung von Drucken als reflektierende Grundschicht bzw. Grundierungsschicht zum Zwecke der Kalibrierung jeweils Cluster von Dekoren gebildet, die eine ähnliche Farbstellung bzw. Farbeinteilung aufweisen. Auch hier erweist sich die Anwendung der multivariaten Datenanalyse (MDA) als hilfreich. So können die Kalibrierspektren von unterschiedlichen Clustern mit Hilfe der PLS-Regression zu einem Kalibriermodell zusammengefügt werden, mit dem alle Proben ohne zusätzliche Kalibrierung vermessbar sind. Damit wird das Problem einer Farbempfindlichkeit des NIR-Detektors gelöst.

Im Falle der Verwendung einer aufgedruckten Dekorschicht als Reflexionsschicht ist bevorzugterweise auf derselbigen mindestens eine Schutzschicht z.B. aus einem Harz oder strahlenhärtbaren Lack vorgesehen. Diese Schutzschicht dient insbesondere dem Schutz des Dekors im Falle einer Zwischenlagerung der bedruckten Trägerplatten vor der weiteren Verarbeitung durch Auftragen der Flüssigoverlayschicht. Das Schutzharz kann ein wasserverträgliches Harz, bevorzugt ein formaldehydhaltiges Harz sein. Die auf der Dekorschicht angeordnete Harzschutzschicht wird typischerweise in einem kontinuierlichen Trockenofen angetrocknet. Besteht die auf der Dekorschicht aufgetragene Schutzschicht hingegen aus einem strahlenhärtbaren Lack, wie zum Beispiel aus der Gruppe der Acrylate, modifizierten Acrylate und/oder Epoxide, erfolgt die Vernetzung und Trocknung derselbigen unter Verwendung von UV- oder Elektronenstrahlung. Die auf der Dekorschicht vorgesehene Schutzschicht liegt vor der weiteren Verarbeitung bevorzugt in angetrockneter und/oder angelierter Form vor.

Wie erwähnt, ist es optional ebenfalls möglich, die Holzwerkstoffplatte als Trägerplatte mit einem UV-Spachtel und/oder ESH-Spachtel vor dem Bedrucken und/oder dem Auftrag der Flüssigoverlayschicht zu beschichten bzw. zu grundieren. Eine UV-Spachtelmasse besteht vorteilhafterweise im Wesentlichen aus UV-härtbaren Lackkomponenten, Pigmenten, Reaktivverdünner und Radikalbildner als Kettenstarter. Ebenfalls ist es möglich, dass die zur Grundierung verwendete Spachtelmasse pigmentiert vorliegt. Auch kann es möglich sein, die Spachtelmasse in mehreren Schichten aufzutragen.

Im Falle der der erfindungsgemäßen Verwendung von Holzwerkstoffplatten als Trägerplatten, wie z.B. eine mitteldichte Faser (MDF)-, hochdichte Faser (HDF)- oder Grobspan (OSB)- oder Sperrholzplatte, , enthalten diese als Bindemittel formaldehydhaltige Harze, wie Melamin-Formaldehyd-Harz, Harnstoff-Formaldehyd-Harz, oder Gemische aus beiden oder Phenol-Formaldehyd-Harz.

Das vorliegende Verfahren zur Bestimmung des Feuchtegehaltes kann zusammenfassend für eine Trägerplatte, insbesondere für eine Holzwerkstoffplatte mit folgendem Aufbau angewendet werden:
- Trägerplatte in Form einer Holzwerkstoffplatte aus Holzfasern,
- mindestens eine Grundierungsschicht, wobei die Grundierungsschicht aus einer a) weißen Grundierungsschicht, b) Dekorschicht oder c) optional Spachtelmasse besteht,
- gegebenenfalls für den Fall einer Dekorschicht als Grundierungsschicht gemäß b) ist auf der Dekorschicht, insbesondere eine vorgetrocknete bzw. angelierte Schutzschicht aus einem Harz oder einem strahlenhärtbaren Lack angeordnet, und
- zu vermessende Harzschicht (Overlay-Schicht), die aus mehreren Harzlagen, zum Beispiel bis zu drei Harzlagen und mehr, bestehen kann.

Wichtig ist auch anzumerken, dass die zu vermessende Harzschicht sowohl auf der Oberseite als auch auf der Unterseite der Holzwerkstoffplatte angeordnet sein kann.

In einer Variante des vorliegenden Verfahrens wird der Feuchtegehalt der Harzschicht nach dem Auftragen der Harzschicht zum Beispiel mittels Walzen auf die Trägerplatte und einem anschließenden Trocknungsschritt in einem Trocknersegment, zum Beispiel in einem Konvektionstrockner, IR- und/oder NIR-Trockner, unter Verwendung des mindestens einen NIR-Detektors durchgeführt. Entsprechend ist mindestens ein NIR-Detektor in einer Fertigungslinie von Werkstoffplatten in Verarbeitungsrichtung hinter einer Auftragsvorrichtung und einer Trocknungsvorrichtung angeordnet.

Für den Fall, dass die zu vermessende Harzschicht aus mehreren Lagen (Harzlagen) besteht, die in jeweils separaten Verfahrensschritten aufgetragen werden - wie oben beschrieben-erfolgt die Bestimmung des Feuchtegehaltes jeder einzelnen Harzlage jeweils nach Auftragen und Trocknen dieser Harzlage. So kann in einer Variante der Harzschicht mit drei Harzlagen der Feuchtegehalt jeweils nach Auftragen der ersten Lage, der zweiten Lage und der dritten Lage durchgeführt werden. Dadurch ist es möglich, den Feuchtegehalt der Harzlagen bzw. der finalen Harzschicht bereits während des Herstellungsprozesses in der Fertigungslinie der Werkstoffplatten anzupassen und einzustellen.

Das vorliegende Verfahren zur Bestimmung des Feuchtegehaltes von einer auf einer Werkstoffplatte vorgesehenen Harzschicht weist mehrere Vorteile auf. So ermöglicht das Verfahren eine zerstörungsfreie kontinuierliche Messung der Feuchte in der Oberfläche (Online-Messung). Des Weiteren wird der Farbeinfluss auf die Messwerte eliminiert und es können Feuchten in Harzschichten in einem Mengenbereich zwischen 10 und 150 g Festharz/m² vermessen werden. Auch ermöglicht das vorliegende Verfahren die Anwendung eines automatisch geregelten Systems mit Alarmmeldung.

Das vorliegende Verfahren zur Bestimmung des Feuchtegehaltes von mindestens einer auf mindestens einer Holzwerkstoffplatte als Trägerplatte vorgesehenen Harzschicht wird in einer Vorrichtung bzw. Fertigungslinie zur Herstellung von Werkstoffplatten durchgeführt, die mindestens eine Auftragsvorrichtung, mindestens eine Trocknungsvorrichtung, und mindestens einen NIR-Detektor zur Durchführung des erfindungsgemäßen Verfahrens umfasst, wobei der mindestens eine NIR-Detektor in Verarbeitungsrichtung nach der Auftragsvorrichtung und der Trocknungsvorrichtung angeordnet ist.

Der mindestens eine NIR-Detektor ist demnach in einer Fertigungslinie der mindestens einen Werkstoffplatte umfassend mindestens eine Auftragsvorrichtung für die Harzschicht, wie zum Beispiel eine Walze, Sprühvorrichtung oder Gießvorrichtung, und mindestens eine Trocknungsvorrichtung, zum Beispiel in Form eines Konvektionstrockners, IR- und/oder NIR-Trockners, angeordnet.

Der NIR-Detektor kann an beliebigen Stellen hinter den Trocknern installiert werden. Dabei kann der Detektor auch über die Plattenbreite traversieren bzw. bestimmte Problembereiche analysieren (z. B. Übertrocknung im Rand- oder Mittelbereich der Platten usw.). Außerdem stehen die Messwerte sofort zur Verfügung und erlauben einen sofortigen Eingriff in den Prozess. Dies ist bei anderen Verfahren nicht ohne weiteres möglich.

Die Vorrichtung bzw. Fertigungslinie zur Herstellung der Werkstoffplatten kann mehr als eine Auftragsvorrichtung und mehr als eine Trocknungsvorrichtung umfassen, wobei mindestens ein NIR-Detektor in Verarbeitungsrichtung jeweils nach einer Auftragsvorrichtung und einer Trocknungsvorrichtung angeordnet ist.
a) Der Aufbau einer Fertigungslinie kann wie folgt aussehen:eine erste Auftragsvorrichtung zum Auftragen einer ersten Harzschicht auf die Oberseite und/oder Unterseite der Trägerplatte, wobei die erste Harzschicht zum Beispiel abriebfeste Partikel in Form von Korundpartikeln enthalten kann,
b) eine in einer Verarbeitungsrichtung hinter der ersten Auftragsvorrichtung angeordnete erste Trocknungsvorrichtung zum Trocknen der ersten oberen und/oder unteren Harzlage auf eine Restfeuchte von 6 bis 9 Gew.%,
c) einen in Verarbeitungsrichtung hinter der ersten Trocknungsvorrichtung angeordneten ersten NIR-Detektor,
d) eine in Verarbeitungsrichtung hinter dem ersten NIR-Detektor angeordnete zweite Auftragsvorrichtung zum Auftragen einer zweiten Harzschicht, die zum Beispiel Zellulosefasern enthalten kann, auf die Oberseite und/oder Unterseite der Trägerplatte,
e) eine in Verarbeitungsrichtung hinter der zweiten Auftragsvorrichtung angeordnete zweite Trocknungsvorrichtung zum Trocknen der zweiten oberen und/oder unteren Harzlage auf eine Restfeuchte von 6 bis 9 Gew.%,
f) ein in Verarbeitungsrichtung hinter der zweiten Trocknungsvorrichtung angeordneter NIR-Detektor zum Bestimmen des Feuchtegehaltes der aufgetragenen Harzlagen,
g) eine in Verarbeitungsrichtung hinter dem zweiten NIR-Detektor angeordnete dritte Auftragsvorrichtung zum Auftragen einer dritten Harzschicht, die zum Beispiel Glaspartikel als abriebfeste Partikel enthalten kann, auf die Oberseite und/oder Unterseite der Trägerplatte,
h) eine in Verarbeitungsrichtung hinter der dritten Auftragsvorrichtung angeordnete dritte Trocknungsvorrichtung zum Trocknen der dritten oberen und unteren Harzlage auf eine Restfeuchte von 4 bis 8 Gew.%,
i) mindestens ein in Verarbeitungsrichtung hinter der dritten Trocknungsvorrichtung angeordneter NIR-Detektor zum Bestimmen des Feuchtegehaltes der aufgetragenen Harzlagen, und
j) eine Kurztaktpresse.

Die zum Einsatz kommenden Auftragsvorrichtungen sind bevorzugterweise Doppelauftragsvorrichtungen, die ein Auftragen der Harzlagen auf die Oberseite und die Unterseite der Holzwerkstoffplatte ermöglichen.

Der Feststoffgehalt der aufzutragenden flüssigen Harzschicht (Flüssigoverlay) liegt zwischen 30 und 80 Gew.%, bevorzugt zwischen 50 und 65 Gew.%.

Je nach Anforderungen der Fertigungslinie ist es selbstverständlich möglich, die Anzahl der Auftragsvorrichtungen, Trocknungsvorrichtungen mit jeweiligem NIR-Detektor zu variieren. So ist es zum Beispiel vorstellbar und möglich, eine Fertigungslinie aus zwei Einheiten umfassend Auftragsvorrichtung, Trocknungsvorrichtung und NIR-Detektor zu verwenden oder auch mehr als drei, wie zum Beispiel vier oder fünf Einheiten aus Auftragsvorrichtung, Trocknungsvorrichtung und NIR-Detektor einzusetzen.

Es ist aber auch vorstellbar und möglich, insbesondere zum Zwecke der Vereinfachung und zur Kostenreduzierung, eine Fertigungslinie derart zu gestalten, dass ein NIR-Detektor nach der letzten Auftragsvorrichtung und Trocknungsvorrichtung vorgesehen ist. In solch einem Fall wird der Feuchtegehalt der aufgebrachten Harzschichten lediglich hinter der letzten Trocknungsvorrichtung bestimmt.

Im Anschluss an den letzten NIR-Detektor ist bevorzugt in Verarbeitungsrichtung eine Kurztaktpresse angeordnet, in der die Harzschicht bzw. Harzschichten unter Druck und Temperatur ausgehärtet werden. Bei diesem abschließenden Verpressen unter Druck- und Temperatureinfluss schmelzen die Harzschichten wieder auf und der Vernetzungsprozess setzt sich fort. Dadurch ist gewährleistet, dass die einzelnen Harzschichten nicht nur in sich, sondern auch untereinander vernetzt werden und so zu einem Laminat verpresst werden können. Üblicherweise arbeiten Kurztaktpressen beispielsweise bei einem Druck von 30 bis 60 kg/cm² und einer Temperatur von 150 bis 220°C, bevorzugt 200°C. Die Presszeit beträgt typischerweise 5 bis 15 sek, bevorzugt 6 bis 12 sek. In der Kurztaktpresse werden üblicherweise strukturierte Pressbleche verwendet, mittels derer zusätzliche Strukturen in die Harzschichten eingeprägt werden können.

Die Erfindung wird nachfolgend unter Bezugnahme auf die Figuren der Zeichnungen an einem Ausführungsbeispiel näher erläutert. Es zeigen:
- Figur 1a: ein Diagramm mit einem NIR-Spektrum gemessen für eine erste Harzschicht mit unbekannten Feuchtegehalt;
- Figur 1b: ein Diagramm mit NIR-Spektren von Referenzproben mit jeweils unterschiedlichen Feuchtegehalt zur Erstellung eines Kalibrationsmodells;
- Figur 2a: ein Diagramm eines ersten PLS-Kalibrationsmodells ermittelt für eine Darrprobe einer mit einer Harzschicht versehenen Trägerplatte; und
- Figur 2b: ein Diagramm eines zweiten PLS-Kalibrationsmodells ermittelt für Referenzproben.

### Ausführungsbeispiel

Die bereits grundierten, vorliegend mit einem Druck versehenen und mit einer Harzschutzschicht versehenen Holzfaserplatten werden in der Produktionslinie vereinzelt und mit einer flüssigen Harzschicht (Flüssigoverlay) beschichtet. Es kann sich bei dem Flüssigoverlay um ein Melamin-Formaldehyd-Harz, ein Harnstoff-Formaldehyd-Harz oder Gemischen aus den beiden Harzen handeln. Der Auftrag der Flüssigoverlayschicht erfolgt bevorzugt mittels Walzen, Sprühen oder Gießen oder einer Kombination der genannten Auftragsverfahren. Bevorzugt ist allerdings das Auftragen des Harzgemisches unter Verwendung einer Walzenvorrichtung. Der Flüssigoverlayschicht können verschleißhemmende Partikel, Hilfsstoffe, wie Netzmittel, Trennmittelhärter und andere Komponenten, wie Glaskugeln oder Zellulose beigefügt werden.

Der Feststoffgehalt der aufzutragenden flüssigen Harzschicht (Flüssigoverlay) liegt zwischen 50 und 65 Gew%. Das Flüssigoverlay wird bevorzugt sowohl auf die Oberseite als auch auf die Rückseite der Holzwerkstoffplatte aufgebracht, wobei der Auftrag auf die Rückseite der Holzwerkstoffplatte ebenfalls unter Verwendung einer Walzvorrichtung erfolgt.

Nach dem Auftrag des Flüssigoverlays durchläuft die Holzwerkstoffplatte ein Trocknungssegment, das zum Beispiel aus einem Konvektions-, einem IR- oder einem NIR-Trockner oder einer Kombination daraus bestehen kann. In diesem Trocknungssegment erfolgt eine Reduzierung der Feuchte in der Harzmatrix auf einen Wert von maximal 10%, bevorzugt auf einen Wert zwischen 6 bis 9 Gew.%. Die Restfeuchte der Harzmatrix, das heißt der Feuchtegehalt der aufgetragenen Harzschicht (flüssiges Overlay) wird nach der Trocknung unter Verwendung von mindestens einem NIR-Detektor bestimmt.

Anschließend durchläuft die Holzwerkstoffplatte zum Zwecke der Auftragung von weiteren Harzlagen weitere Walzenauftragsvorrichtungen und Trocknungsvorrichtungen. In den weiteren Auftragsvorrichtungen wird wiederum eine flüssige Harzschicht aufgebracht, die ebenfalls die genannten abriebfesten Partikel und Fasern und weitere Hilfsstoffe oder auch Farbstoffe enthalten kann. Auch in der weiteren Auftragsvorrichtung kann ein Auftrag der Harzschicht auf die Rückseite der Holzwerkstoffplatte erfolgen. Nach Auftrag und Zwischentrocknung der weiteren Harzschicht kann sich eine erneute Feuchtemessung anschließen. Der Auftrag der Harzschicht mit anschließender Trocknung kann sich noch mehrfach wiederholen, was ebenfalls für die Messung der Feuchte gilt. Nach dem letzten Harzauftrag kann eine abschließende Bestimmung des Feuchtegehaltes der Harzschicht unter Verwendung eines NIR-Detektors erfolgen. Dabei sollte der Feuchtegehalt, unter 8% liegen, bevorzugt bei Werten zwischen 4 bis 8 Gew.%. Es ist ebenfalls denkbar, zur Vereinfachung und damit zur Kostenreduzierung des gesamten Verfahrens, den Feuchtegehalt der aufgetragenen Harzschicht lediglich hinter der letzten Trocknungsvorrichtung zu bestimmen. Nachdem alle Harzschichten auf die Grundierungsschicht der Holzwerkstoffplatte aufgebracht worden sind, wird die so beschichtete Holzwerkstoffplatte einer Kurztaktpresse zugeführt und die Harzschicht in dieser Kurztaktpresse unter Druck und Temperatur ausgehärtet.

Durch Verwendung von geeigneten verchromten und strukturierten Stahlblechen in der Kurztaktpresse ist es möglich, in der Harzoberfläche der Holzwerkstoffplatte definierte Strukturen einzuprägen. Nach dem Pressen werden die üblichen Qualitätsparameter wie Aushärtung und Porosität bestimmt. Bei Abweichungen von der gewünschten Qualität kann durch Anpassung der Prozessparameter eine Verbesserung der Harzschicht (Flüssigoverlay) herbeigeführt werden.

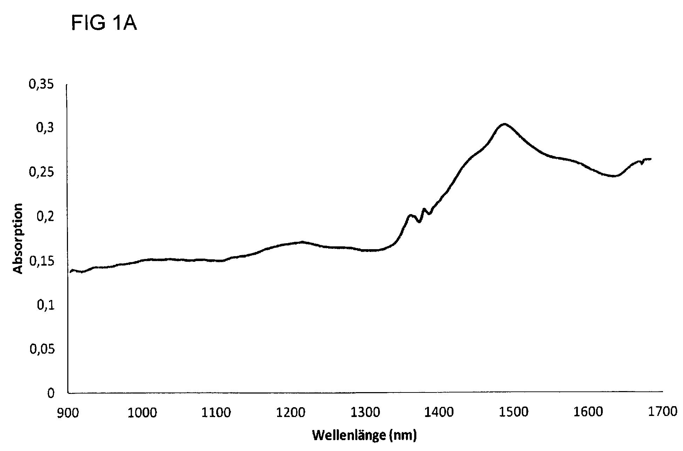

Aus dem Diagramm der Figur 1a ist ein typisches NIR-Spektrum einer gemäß dem Ausführungsbeispiel aufgetragenen Melamin-Formaldehyd-Harzschicht entnehmbar. Das NIR-Spektrum wurde vorliegend in einem Wellenlängenbereich zwischen 900 und 1700 nm aufgenommen. Für die Aufnahmen der NIR-Spektren wurde ein NIR-Messgerät der Fa. Perten verwendet. Der Messkopf trägt die Bezeichnung DA 7400.

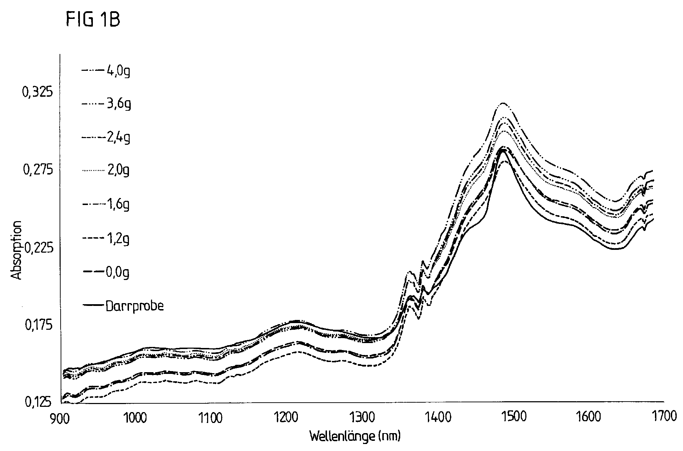

Das Diagramm der Figur 1b zeigt NIR-Spektren von Referenzproben mit unterschiedlichem Feuchtegehalt. Erkennbar ist, dass sich die NIR-Spektren insbesondere in der Höhe der Basislinie unterscheiden. Je höher der Feuchtegehalt desto höher die Basislinie und somit auch der Absorptionswert für das Absorptionsmaximum bei 1490 nm, wie in der folgenden Tabelle dargestellt.

**Tabelle 1: Korrelation von Feuchtegehalt und NIR-Absorptionsmaximum**

| Feuchte (g/m²) | Absorptionsmax. bei 1490 nm |
|---|---|
| 4 | 0,3175 |
| 3,6 | 0,3084 |
| 2,4 | 0,3047 |
| 2,0 | 0,3004 |
| 1,6 | 0,2894 |
| 1,2 | 0,2795 |
| 0 | 0,2885 |

So korreliert eine Probe mit einem Feuchtegehalt von 1,2 g/m² mit einem Absorptionsmaximum bei 1490 nm von 0,2795, während eine Probe mit einem Feuchtegehalt von 4 g/m² ein Absorptionsmaximum von 0,3175 aufweist. Entsprechend ist auch die Basislinie der Proben zu höheren Absorptionswerten verschoben. Aus diesem Grunde erfolgt die Interpretation der NIR-Spektren mittels der multivariaten Datenanlyse (MDA) über den gesamten aufgenommen Spektralbereich des NIR-Spektrums.

Zur weiteren Auswertung der NIR-Spektren werden geeignete Kalibrationsmodelle erstellt.

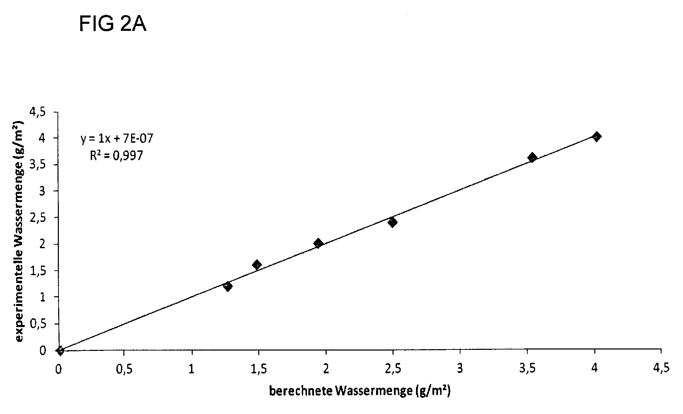

So zeigt das Diagramm der Figur 2a ein erstes Kalibrationsmodell für die NIR-Spektren der Referenzproben aus Figur 1b (ohne Darrprobe), welches unter Verwendung der Partial Least Squares (PLS) Regression ermittelt wurde.

Dieses Modell wird zur Bestimmung der Restfeuchte in der Darrprobe genutzt. Unter Anwendung des ersten Kalibrationsmodells wird von dem Analyseprogramm SIMCA-P einen Feuchtegehalt für die Darrprobe berechnet. Dazu wird die Partial Least Square (PLS) Regression zur Erstellung einer Kalibrierfunktion benutzt, die eine Abhängigkeit zwischen Spektrum und Feuchtegehalt beschreibt. Für den Feuchtegehalt der Darrprobe wird von dem Analyseprogramm unter Anwendung der erstellten Kalibrierfunktion einen Feuchtegehalt von -2,9 g/m² berechnet (siehe auch Tabelle 2).

**Tabelle 2: Feuchtegehalt der Referenzproben gemäß erstem Kalibrationsmodell ohne Berücksichtigung der Darr-Probe**

| Feuchte experimentell (g/m²) | Feuchte berechnet (g/m²) |
|---|---|
| 4,0 | 4,028204 |
| 3,6 | 3,546026 |
| 2,4 | 2,501772 |
| 2,0 | 1,946527 |
| 1,6 | 1,489633 |
| 1,2 | 1,27186 |
| 0 | 0,015972 |
| Unbekannt (Darrprobe) | -2,906791 |

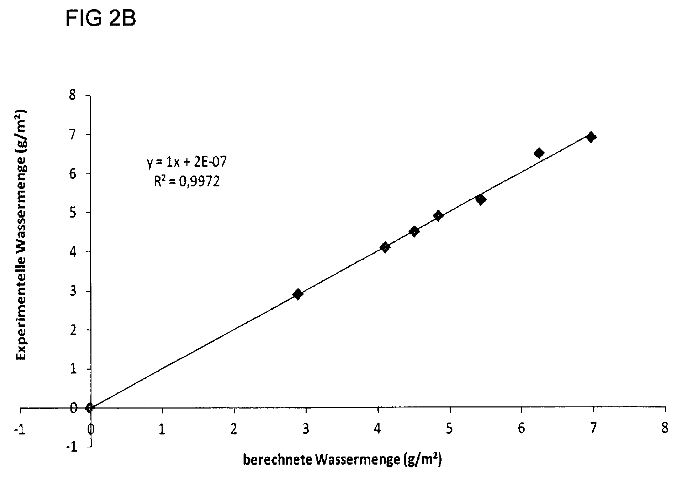

Anschließend wird der Betrag des Feuchtegehaltes von 2,9 g/m² für die Darrprobe zu allen verwendeten Feuchtewerten der Kalibrierproben bzw. Referenzproben addiert und der Feuchtegehalt der Darrprobe gleich Null gesetzt. Aus diesen neuen Kalibrierwerten der Feuchte und den gemessenen Spektren wird mit Hilfe der Partial Least Squares (PLS) Regression ein zweites Kalibrationsmodell erstellt (Figur 2b), welches nunmehr geeignet ist, eine Beziehung zwischen den gemessenen NIR-Spektren einer zu vermessenden Harzschicht auf einer Trägerplatte und den NIR-Spektren von Referenzproben mit bekannten Feuchtegehalt zu erstellen (siehe Tabelle 3).

**Tabelle 3: Feuchtegehalt der Referenzproben und der unbekannten Probe gemäß zweitem Kalibrationsmodell mit Berücksichtigung der Darr-Probe**

| Feuchte experimentell (g/m²) | Feuchte berechnet (g/m²) |
|---|---|
| 6,9 | 6,992321 |
| 6,5 | 6,264024 |
| 5,3 | 5,459239 |
| 4,9 | 4,860341 |
| 4,5 | 4,518459 |
| 4,1 | 4,119654 |
| 2,9 | 2,897086 |
| (Darrprobe) 0 | -0,01112 |
| Unbekannt (Spektrum Fig. 1a) | 5,814462 |

Unter Heranziehung des in Figur 2b gezeigten PLS-Kalibrationsmodels der linearen Regression wird anschließend das für das obige Ausführungsbeispiel ermittelte NIR-Spektrum einem bestimmten Feuchtegehalt zugeordnet. So korreliert im vorliegenden Fall das NIR-Spektrum des Ausführungsbeispiels der Figur 1 a einem Feuchtegehalt von ca. 5,8 g/m².

## Patentansprüche

1. Verfahren zur Bestimmung des Feuchtgehaltes von mindestens einer auf mindestens einer Holzwerkstoffplatte als Trägerplatte vorgesehenen Harzschicht, wobei zwischen der mindestens einen Harzschicht und der Trägerplatte eine NIR-reflektierende Schicht vorgesehen ist,
umfassend die Schritte
- Aufnehmen von mindestens einem NIR-Spektrum der auf der mindestens einen Trägerplatte vorgesehenen Harzschicht unter Verwendung eines NIR-Detektors in einem Wellenlängenbereich zwischen 500 nm und 2500 nm, bevorzugt zwischen 700 nm und 2000 nm, insbesondere bevorzugt zwischen 900nm und 1700 nm;
- Bestimmen des Feuchtegehaltes der Harzschicht durch Vergleich des für die zu vermessende Harzschicht ermittelten NIR-Spektrums mit mindestens einem für mindestens eine Referenzprobe mit bekannten Feuchtegehalt ermittelten NIR-Spektrums mittels einer multivariaten Datenanalyse (MDA),
- wobei das mindestens eine für die mindestens eine Referenzprobe ermittelte NIR-Spektrum mit bekanntem Feuchtegehalt unter Verwendung desselben NIR-Detektors in einem Wellenlängenbereich zwischen 500 nm und 2500 nm, bevorzugt zwischen 700 nm und 2000 nm, insbesondere bevorzugt zwischen 900 nm und 1700 nm vorher bestimmt wurde.

2. Verfahren nach Anspruch 1, **dadurch gekennzeichnet, dass** die mindestens eine Holzwerkstoffplatte eine mitteldichte Faser (MDF)-, hochdichte Faser (HDF)- oder Grobspan (OSB)- oder Sperrholzplatte ist.

3. Verfahren nach einem der vorhergehenden Ansprüche, **dadurch gekennzeichnet, dass** die Referenzprobe mit bekannten Feuchtegehalt mindestens eine auf einer Trägerplatte aufgetragene, insbesondere vorgetrocknete, Harzschicht umfasst, wobei Harzschicht und Trägerplatte der Referenzprobe gleichartig zu der zu vermessenden Probe aus Harzschicht und Trägerplatte sind.

4. Verfahren nach einem der vorhergehenden Ansprüche, **dadurch gekennzeichnet, dass** die zu vermessende Harzschicht aus mindestens einem formaldehydhaltigen Harz, insbesondere einem Melamin-Formaldehyd-Harz, einem Harnstoff-Formaldehyd-Harz oder Gemischen aus beiden, einem Polyurethan oder einem Acrylat besteht.

5. Verfahren nach einem der vorhergehenden Ansprüche, **dadurch gekennzeichnet, dass** die zu vermessende Harzschicht abriebfeste Partikel, natürliche und/oder synthetische Fasern und weitere Additive aufweist.

6. Verfahren nach einem der vorhergehenden Ansprüche, **dadurch gekennzeichnet, dass** die zu vermessende Harzschicht mehr als eine Lage, mindestens zwei Lagen umfasst.

7. Verfahren nach Anspruch 6, **dadurch gekennzeichnet, dass** die zu vermessende Harzschicht drei Lagen umfasst, wobei in einer der drei Lagen der Harzschicht abriebfeste Partikel enthalten sind, in einer zweiten der drei Lagen natürliche und/oder synthetische Fasern enthalten sind und in einer dritten der drei Lagen wiederum abriebfeste Partikel enthalten sind.

8. Verfahren nach einem der vorhergehenden Ansprüche, **dadurch gekennzeichnet, dass** die Bestimmung des Feuchtegehaltes der Harzschicht nach dem Auftragen der Harzschicht auf die Trägerplatte und einem Trocknungsschritt in einem Trocknersegment unter Verwendung des mindestens einen NIR-Detektors erfolgt.

9. Verfahren nach einem der vorhergehenden Ansprüche, **dadurch gekennzeichnet, dass** die Bestimmung der Feuchtgehaltes der Harzschicht jeweils nach Auftragen und Trocknen von mindestens einer Harzlage erfolgt.

10. Verfahren nach einem der vorhergehenden Ansprüche, **dadurch gekennzeichnet, dass** die mindestens eine NIR-reflektierende Schicht mindestens eine weiße Grundierungsschicht und/oder mindestens eine auf die Holzwerkstoffplatte aufgedruckte Dekorschicht umfasst.

11. Verfahren nach Anspruch 10, **dadurch gekennzeichnet, dass** die mindestens eine auf die Holzwerkstoffplatte aufgedruckte Dekorschicht eine wasserbasierte pigmentierte Druckfarbe ist, die im Tiefdruckverfahren oder im Digitaldruckverfahren aufgetragen wird.

12. Verfahren nach Anspruch 10 oder 11, **dadurch gekennzeichnet, dass** auf die mindestens eine auf die Holzwerkstoffplatte aufgedruckte Dekorschicht mindestens eine Schutzschicht aus einem Harz vorgesehen ist.

13. Verfahren nach einem der vorhergehenden Ansprüche, **dadurch gekennzeichnet, dass** die zu vermessende Harzschicht auf der Oberseite und/oder Unterseite der Trägerplatte angeordnet ist.

14. Verwendung von mindestens einem NIR-Detektor zur Bestimmung des Feuchtegehaltes von mindesten einer auf einer Holzwerkstoffplatte als Trägerplatte angeordneten Harzschicht gemäß einem Verfahren nach einem der Ansprüche 1 bis 13 in einer Vorrichtung zur Herstellung von Werkstoffplatten, wobei die Vorrichtung mindestens eine Auftragsvorrichtung, mindestens eine Trocknungsvorrichtung, und mindestens einen NIR-Detektor umfasst, wobei der mindestens eine NIR-Detektor in Verarbeitungsrichtung nach der Auftragsvorrichtung und der Trocknungsvorrichtung angeordnet ist.

## Claims

1. Method for determining the moisture content of at least one resin layer provided on at least one wooden board as carrier plate, wherein between the at least one resin layer and the carrier plate an NIR reflecting layer is provided,
comprising the steps
- recording of at least one NIR spectrum of the at least one resin layer provided on the at least one carrier plate using a NIR detector in a wavelength range between 500 nm an 2500 nm, preferably between 700 nm and 2000 nm, in particular preferably between 900 nm and 1700 nm;
- determining the moisture content of the resin layer by comparing the NIR spectrum recorded for the resin layer to be measured with at least one NIR spectrum obtained for at least on reference sample with known moisture content by means of a multi variate data analysis (MDA),
- wherein the at least one NIR spectrum for the at least one reference sample with known moisture content was determined previously using the same NIR detector in a wavelength range between 500 nm and 2500 nm, preferably between 700 nm and 2000 nm, in particular preferably between 900 nm and 1700 nm.

2. Method according to claim 1, **characterized in that** the at least one wooden board is a medium density fiber (MDF), high density fiber (HDF) or oriented strand (OSB) board or a plywood panel.

3. Method according to one of the preceding claims, **characterized in that** the reference sample with known moisture content comprises at least one, preferably pre-dried resin layer applied to a carrier board, wherein the resin layer and the carrier board of the reference sample are of the same kind of the sample of resin layer and carrier board to be measured.

4. Method according to one of the preceding claims, **characterized in that** the resin layer to be measured consists of at least one formaldehyde containing resin, in particular, a melamine formaldehyde resin, a urea formaldehyde resin or mixtures thereof, a polyurethane or an acrylate.

5. Method according to one of the preceding claims, **characterized in that** the resin layer to be measured comprises abrasive resistant particles, natural and/synthetic fibers and further additives.

6. Method according to one of the preceding claims, **characterized in that** the resin layer to be measured comprises more than one layer, at least two layers.

7. Method according to claim 6, **characterized in that** the resin layer to be measured comprises three layers, wherein in one of the three layers of the resin layer abrasive resistant particles are present, in a second of the three layers natural and/or synthetic fibers are present and in a third of the three layers again abrasive resistant particles are present.

8. Method according to one of the preceding claims, **characterized in that** the determination of the moisture content of the resin layer is carried out after applying the resin layer to the carrier board and a drying step in a dryer segment using the at least one NIR detector.

9. Method according to one of the preceding claims, **characterized in that** the determination of the moisture content of the resin layer takes place after applying and drying at least one resin layer, respectively.

10. Method according to one of the preceding claims, **characterized in that** the at least one NIR reflecting layer comprises at least one white priming layer and/or at least one decor layer printed onto the wooden board.

11. Method according to claim 10, **characterized in that** the at least one decor layer printed on the wooden board is a water-based pigmented printing color, which is applied in gravure printing or digital printing.

12. Method according to claim 10 or 11, **characterized in that** at least one protective layer of a resin is provided on the at least one decor layer printed on the wooden board.

13. Method according to one of the preceding claims, **characterized in that** the resin layer to be measured is arranged on the upper side and/or lower side of the carrier board.

14. Use of at least one NIR detector for determining the moisture content of at least one resin layer arranged on a wooden board as carrier board according to the method according to one of the claims 1 to 13 in a device for producing wooden boards, wherein the device comprises at least one application device, at least one drying device and at least one NIR detector, wherein the at least one NIR detector is arranged in processing direction after the applying device and the drying device.

## Revendications

1. Procédé destiné à déterminer la teneur en humidité d'au moins une couche de résine prévue sur au moins un panneau en matière dérivée du bois en tant que panneau de support, entre l'au moins une couche de résine et le panneau de support étant prévue une couche réfléchissante NIR (proche infrarouge),
comprenant les étapes suivantes
- enregistrement d'au moins un spectre NIR de la couche de résine prévue sur l'au moins un panneau de support en utilisant un détecteur NIR dans une plage de longueurs d'onde comprise entre 500 nm et 2500 nm, de préférence entre 700 nm et 2000 nm, de manière particulièrement préférée entre 900 nm et 1700 nm ;
- détermination de la teneur en humidité de la couche de résine par comparaison du spectre NIR déterminé pour la couche de résine qui doit être mesurée, avec au moins un spectre NIR déterminé pour au moins un échantillon de référence avec une teneur en humidité connue, au moyen d'une analyse discriminante (MDA) de données,
- l'au moins un spectre NIR déterminé pour l'au moins un échantillon de référence avec une teneur en humidité connue ayant été préalablement déterminé en utilisant le même détecteur NIR dans une plage de longueurs d'onde comprise entre 500 nm et 2500 nm, de préférence entre 700 nm et 2000 nm, de manière particulièrement préférée entre 900 nm et 1700 nm.

2. Procédé selon la revendication 1, **caractérisé en ce que** l'au moins un panneau en matière dérivée du bois est de préférence un panneau de fibres de densité moyenne (MDF), un panneau de fibre de haute densité (HDF) ou un panneau en aggloméré gros oeuvre (OSB) ou un panneau de contreplaqué.

3. Procédé selon l'une quelconque des revendications précédentes, **caractérisé en ce que** l'échantillon de référence avec une teneur en humidité connue comprend au moins une couche de résine, notamment préséchée, appliquée sur un panneau de support, la couche de résine et le panneau de support de l'échantillon de référence étant de type identique à l'échantillon qui doit être mesuré, constitué d'une couche de résine et d'un panneau de support.

4. Procédé selon l'une quelconque des revendications précédentes, **caractérisé en ce que** la couche de résine qui doit être mesurée est constituée d'au moins une résine contenant du formaldéhyde, notamment d'une résine mélamine-formaldéhyde, d'une résine urée-formaldéhyde ou de mélanges des deux, d'un polyuréthane ou d'un acrylate.

5. Procédé selon l'une quelconque des revendications précédentes, **caractérisé en ce que** la couche de résine qui doit être mesurée comporte des particules résistant à l'abrasion, des fibres naturelles et/ou synthétiques et d'autres additifs.

6. Procédé selon l'une quelconque des revendications précédentes, **caractérisé en ce que** la couche de résine qui doit être mesurée comprend plus d'une couche, au moins deux couches.

7. Procédé selon la revendication 6, **caractérisé en ce que** la couche de résine qui doit être mesurée comprend trois couches, dans l'une des trois couches de la couche de résine étant contenues des particules résistant à l'abrasion, dans une deuxième des trois couches étant contenues des fibres naturelles et/ou synthétiques et dans une troisième des trois couches étant de nouveau contenues des particules résistant à l'abrasion.

8. Procédé selon l'une quelconque des revendications précédentes, **caractérisé en ce qu'**après l'application de la couche de résine sur le panneau de support et une étape de séchage dans un segment de séchoir, la détermination de la teneur en humidité de la couche de résine est effectuée en utilisant l'au moins un détecteur NIR.

9. Procédé selon l'une quelconque des revendications précédentes, **caractérisé en ce que** la détermination de la teneur en humidité de la couche de résine s'effectue respectivement après l'application et le séchage d'au moins une couche de résine.

10. Procédé selon l'une quelconque des revendications précédentes, **caractérisé en ce que** l'au moins une couche réfléchissante NIR comprend au moins une couche d'apprêt blanche et/ou au moins une couche décorative imprimée sur le panneau en matière dérivée du bois.

11. Procédé selon la revendication 10, **caractérisé en ce que** l'au moins une couche décorative imprimée sur le panneau en matière dérivée du bois est une encre d'impression pigmentée sur base aqueuse, que l'on applique par procédé d'héliogravure ou d'impression numérique.

12. Procédé selon la revendication 10 ou 11, **caractérisé en ce que** sur l'au moins une couche décorative imprimée sur le panneau en matière dérivée du bois, il est prévu au moins une couche protectrice en une résine.

13. Procédé selon l'une quelconque des revendications précédentes, **caractérisé en ce que** la couche de résine qui doit être mesurée est placée sur la face supérieure et/ou sur la face inférieure du panneau de support.

14. Utilisation du procédé selon l'une quelconque des revendications 1 à 13 dans un dispositif destiné à la fabrication de panneaux en matériaux, le dispositif comprenant au moins un dispositif d'application, au moins un dispositif de séchage et au moins un détecteur NIR, l'au moins un détecteur NIR étant placé en aval du dispositif d'application et du dispositif de séchage, dans la direction de traitement.
